# EUROPÄISCHE PATENTANMELDUNG

(11) **EP 1 286 183 A2**
(43) Veröffentlichungstag der Anmeldung: **26.02.2003**
(21) Anmeldenummer: 02017825.7
(22) Anmeldetag: 08.08.2002
(51) Int. Cl.: G01V 15/00

(54) **System zum Auffinden von Streumunition-Blindgängern**

(30) Priorität: 10.08.2001 DE 10139502
(71) Anmelder: Diehl Munitionssysteme GmbH & Co. KG, 90552 Röthenbach (DE); Euro Rocket System GmbH, 90552 Röthenbach (DE)
(72) Erfinder: Rentzsch, Max, 91220 Schnaittach (DE); Günther, Andreas, 91207 Lauf (DE); Wich, Harald, 91207 Lauf (DE)
(74) Vertreter: Stammler, Wolfgang (DE), Dipl.-Phys.

(57) **Zusammenfassung**

Es wird ein System zur zügigen, sicheren und zuverlässigen Detektion von Streumunitions-Blindgängern beschrieben, indem nur das unzerstörte Bomblet noch mit einem funktionstüchtigen passiven Radiofrequenz-Antwortetikett (RF-Tag) ausgestattet ist, das über kurze Distanzen mittels eines mobilen RF-Detektors in EAS-Technologie erfaßbar ist, wie sie beispielsweise in Kaufhäusern zur Diebstahlsicherung stationär zur Anwendung gelangt.

## Beschreibung

Wegen ihrer Gefährdung der Zivilbevölkerung sind Antipersonen-Landminen fast weltweit geächtet, die Arsenale der Bedarfsträger werden zur Vernichtung geräumt. In ehemaligen Kampfgebieten verbleibt aber die Gefährdung durch Blindgänger von Streumunition, wie sie als Bomblets zur Abwehr hartgepanzerter Ziele (insbesondere Kampfpanzer) über ein Zielgebiet verbracht werden, etwa mittels des Flugdispensers MW1, mittels des Artillerieraketen-Systemes MLRS-1 oder mittels Lastengeschossen. Bezüglich des Einsatzes und der Funktion solcher Streumunition wird beispielshalber verwiesen auf die DE-Zeitschrift "Wehrtechnik" 1983, Heft 1, Seite 73 oder 1995, Heft 2, Seite 40.

Beim Aufnehmen kann ein solcher als Blindgänger unversehrt niedergegangener Munitionsartikel doch noch detonieren und dann Verletzungen ähnlich der Wirkung von kleinen Minen hervorrufen. Um auch eine solche Bedrohung der Zivilbevölkerung möglich vermeiden zu können, werden Bomblets künftig mit Selbstzerlegereinrichtungen ausgestattet, wie sie etwa in der DE 43 21 941 A1 beschrieben sind. Eine solche Lösung ist allerdings apparativ und damit auch aus Kostengesichtspunkten sehr aufwendig für einen Massenartikel wie die als Streumunition verbrachten Bomblets. In vorhandene Magazinbestände lassen sich derartige Selbstzerlegereinrichtungen nachträglich ohnehin nicht mehr einbauen. Andererseits fordert die US-Armee für die modernen Selbstzerlegerzünder in Bomblets eine Blindgängerrate von < 1 %. Angesichts allein schon des in Europa vorgehaltenen Bestandes in der Größenordnung von fast 100 Mio Bomblets nur für das MLRS-System ist deshalb im Ernstfall mit einer Blindgänger-Anzahl von wenigstens 1 Mio Stück im Kampfgebiet zu rechnen. Das bedeutet, daß selbst bei Ausstattung von Streumunition mit moderner Zündertechnologie eine kritische Restbedrohung der Zivilbevölkerung verbleibt, die nach Ende der Kampfhandlungen das seinerzeitige Zielgelände für den Streumunitionsabwurf bewirtschaften möchte. Das Aufspüren von Streumunitions-Blindgängern mittels Metalldetektoren, wie sie zur Suche nach Panzerminen eingesetzt werden, ist schließlich wenig erfolgversprechend angesichts der kleinen Abmessungen der nicht detonierten Bomblets in einem mit zahlreichen Metalltrümmern verseuchten Umfeld.

In Erkenntnis dieser Gegebenheiten liegt vorliegender Erfindung die technische Problemstellung zugrunde, ein einfacher realisierbares, preiswertes und auch im Depot nachträglich noch einsetzbares System zum zuverlässigen Auffinden von Bomblet-Blindgängern anzugeben.

Diese Aufgabe ist erfindungsgemäß durch die im Hauptanspruch angegebene Merkmalskombination gelöst. Danach wird für vorliegendes, militärisches Problemfeld auf die Technologie der Diebstahlssicherung im Handel zurückgegriffen, die darauf beruht, den zu sichernden Gegenstand (etwa ein Kleidungsstück) mit einem auf Hochfrequenzeinstrahlung reagierenden Anhänger auszustatten, einem sog. RF-Tag, der beim Passieren einer stationären Antennenschleuse etwa am Ausgang einer Fachabteilung oder eines Gebäudes eine Signalgabe auslöst. Diese Diebstahlssicherungstechnologie ist in großer Stückzahl und deshalb preisgünstig und technologisch ohne besondere Risiken im Einsatz.

Jene Technologie wird etwa als EAS (Electronic Article Surveillance) beispielsweise von der Fa. AIM in Pittsburgh/USA vertrieben. Die im Handelsbereich eingesetzten stationären Antennen und Signalgeber stehen als funktionsgerechte Massenartikel preisgünstig zur Verfügung und können für den Einsatz vorliegender Erfindung in tragbares oder fahrbares Gerät zur Abstrahlung von Hochfrequenz und - als Reaktion auf das Erfassen eines Tag - zum Empfang modifizierter Hochfrequenzsignale eingesetzt werden.

Im Rahmen vorliegender Erfindung wird jene Technologie in Form von auf die einzelnen Munitionsartikel einfach außen aufbringbaren Antwort-Etiketten eingesetzt. Diese werden zerstört, wenn die Munitionsartikel detonieren. Dagegen bleiben sie mit hoher Zuverlässigkeit hochfrequenztechnisch wirksam, wenn ein Bomblet oder dergleichen damit bestückter Munitionsartikel als Blindgänger niedergegangen ist.

Beim Absuchen eines Geländestreifens mit einer Hochfrequenz abstrahlenden und aufnehmenden Sendeempfangseinrichtung, einem sog. Transceiver, wird ein von der HF-Strahlung erfaßtes, noch unzerstörtes solches Antwort-Etikett zum Rückstrahlen eines von der Sendefrequenz abweichenden Hochfrequenzsignales angeregt, das am Sendeort hochfrequenztechnisch empfangen und z.B. in ein optisches oder akustisches Signal umgesetzt wird, welches angibt, daß hier offenbar im Umfeld weniger Meter ein Blindgänger liegt.

Mit einem solchen Detektor in Form eines Hochfrequenz-Sendeempfangsgerätes kann etwa ein besonders geschütztes Fahrzeug ausgestattet werden, um einen Geländestreifen abzufahren und in diesem Streifen ohne großen Zeitaufwand zuverlässig dort etwa verborgene Blindgänger über die Reaktionen ihrer Antwort-Etiketten aufzuspüren; die dann beispielsweise von dafür ausgestatteten Räumpionieren durch äußere Einwirkung (wie Beschuß von Bord des Fahrzeugs aus) unschädlich gemacht oder zum Abtransport in besonders gesicherte Container eingesammelt werden können.

So sind mittels des erfindungsgemäßen Systems die bekannten Probleme von Blindgängern in Streumunition mit einfachen Mitteln zuverlässig gelöst, indem in Friedenszeiten keine militärischen Hinterlassenschaften zurückbleiben, die letztlich kampfunbeteiligte Zivilisten gefährden könnten.

In der beigefügten Tabelle 1 sind im Rahmen des erfindungsgemäßen Systems verwendbare Antwort-Etiketten zum Vergleich miteinander den physikalischen Eigenschaften dieser Etiketten, ihrer Funktionsweise, derem Aufbau, dem Frequenzbereich und dem Erreger- und Empfangssignal einander zugeordnet. Danach kommen im Rahmen vorliegender Erfindung für die Realisierung eines solchen Antwort-Etikettes sehr verschiedene Technologien in Betracht. Während bei den elektromagnetischen Varianten das elektromagnetische Feld zum Speisen eines Schaltungselementes mit nichtlinearer Strom-Spannungs-Kennlinie von einer Dipol-Antenne aufgenommen wird, beruhen die magnetischen Varianten unmittelbar auf der Aufnahme der magnetischen Feldkomponente durch einen magnetisch aktiven Körper. So kann das Etikett akusto-magnetisch resonant ausgelegt sein, also magnetostriktives Verhalten aufweisen. Andererseits kann das Etikett beispielsweise den Barkhausen-Effekt auswerten, also nicht-linearer magnetisch ausgelegt sein. Von besonderem praktischen Interesse ist im Rahmen vorliegender Erfindung aber eine resonante oder nichtlineare elektromagnetische Auslegung des Antwort-Etikettes, da ein solches Etikett sich leicht auf der Außenmantelfläche eines Munitionsartikels anbringen läßt und in seiner Funktion von dessen Metallmasse am wenigsten beeinflußt wird.

Die Auslegung einer solchen Antenne kann als gedruckter Dipol auf einer flexiblen, elektrisch isolierenden Kunststoff-Folie erfolgen, die auf ihrer sicht-abgelegenen, unteren (nach der Bestückung dem Munitionskörper zugewandten) Oberfläche vollflächig elektrisch leitend etwa mit einem Kupferniederschlag kaschiert ist. Dadurch kann solch ein Etikett ohne in seiner hochfrequenztechnischen Auslegung wesentlich verstimmt zu werden innig auf die metallene Außenmantelfläche eines Bomblet appliziert (etwa aufgeklebt) werden. Die gegenüber frei liegende Fläche des Trägermaterials ist mit einer Dipolstruktur kaschiert, bestehend im wesentlichen aus zwei einander gegenüber angeordneten elektrisch leitenden geometrischen Strukturen. Der freie Abstand zwischen ihnen ist von einem nicht-linearen elektrischen Element überbrückt, etwa von einer Hochfrequenzdiode. Jeder der beiden Dipole ist auf ein Viertel der Wellenlänge einer von einem Suchgerät elektromagnetisch eingestrahlten Hochfrequenz in der Größenordnung z.B. einiger GHz abgestimmt, deren Amplitude nicht ausreicht, das nichtlineare Element durchzusteuern. Deshalb reflektiert diese Dipolanordnung die vom Suchgerät her eingestrahlte Hochfrequenz.

Vom Suchgerät aus erfolgt aber zusätzlich eine weitere Frequenzeinkopplung von gewöhnlich niedrigerer Frequenz und unter Umständen höherer Amplitude, die sich auf dem Etikett der aktuellen Hochfrequenzamplitude überlagert und deshalb periodisch zum Durchsteuern des nichtlinearen Elementes und dadurch zu einem mehr oder weniger guten Kurzschluß zwischen den beiden Dipole führt. Das bedeutet, daß die von dieser Antennenstruktur reflektierte Hochfrequenz mit der Frequenz der weiteren Einstrahlung amplitudenmoduliert ist, was seitens des Detektors zur Aufnahme der reflektierten Strahlung ein untrügliches Zeichen dafür ist, daß ein funktionstüchtiges, also unzerstörtes Etikett und deshalb ein nicht detonierter Munitionsartikel, also ein Blindgänger, im näheren Umkreis liegend erfaßt wurde.

Die eingespeiste zweite Frequenz kann sehr niedrig im Vergleich zur zuvor erwähnten Hochfrequenz sein (etwa in der Größenordnung von 100 kHz), die dann elektrostatisch über die Dipole in das Etikett eingekoppelt wird und vom Etikett eine niederfrequente Amplitudenmodulation der am Etikett reflektierten Hochfrequenz liefert.

Die zweite Frequenz kann aber auch in der Größenordnung wie die erste hochfrequente Frequenz sein, also über die selbe Antenne elektromagnetisch eingespeist werden, um zu einer Mischfrequenz zu führen, die detektorseitig wieder in ein visuelles und/oder in ein akustisches Signal über die Auffassung eines Antwort-Etikettes an einem Blindgänger umgesetzt werden kann. In diesem Falle der Einstrahlung zweier Hochfrequenzen ist das Etikett mit einer breitbandig aufgeweiteten Antennenstruktur ausgestattet, etwa wie sie als Schmetterlings-Dipol (in der Geometrie zweier mit ihren Spitzen aufeinander zu weisender Viertelkreise) als solche geläufig ist.

Als nicht-lineares Element zwischen den beiden Dipolen kann wie erwähnt eine miniaturisierte Hochfrequenzdiode eingesetzt werden. Sollte die aber aufgrund ihrer mechanischen Abmessungen noch zu stark auftragen, wenn das Etikett auf die zylindrische Außenmantelfläche des Munitionsartikels geklebt ist, dann kann das nichtlineare Element zwischen den beiden Viertelwellen-Dipolen statt dessen auch durch flache Überlappung einer entsprechend wirkenden Materialkombination realisiert werden. So kann auf der Trägerfolie der eine Sektor als Kupferkaschierung und der andere, gegenüberliegend darauf zu weisende Sektor als Metallkaschierung aus anderem Material (etwa Zink) ausgelegt sein, mit einer kleinflächigen gegenseitigen Überlappung der Spitzen beider Sektoren. Dieser Überlappungsbereich von Kupfer und dem anderen Metall bildet dann das elektrisch nicht-lineare Element.

Jedenfalls ist erfindungsgemäß als Kennungsgeber ein Antwort-Etikett geschaffen, das sich als flaches biegsames Element auf etwa die zylindrische Außenfläche eines Munitionsartikels aufbringen läßt und - wenn es wegen eines Blindgängers nicht mechanisch zerstört ist - auf die Überlagerung zweier Suchfrequenzen mit einer Frequenzmodulation bzw. Mischfrequenz als untrüglichem Zeichen für einen ganz in der Nähe liegenden Blindgänger reagiert.

Anlage : Tabelle 1 (Antwort-Etiketten nach Funktionsprinzipen geordnet)

## Patentansprüche

1. System zur Detektion von Streumunitions-Blindgängern,
**dadurch gekennzeichnet,**
**daß** jeder Munitionsartikel der Streumunition wie insbesondere jedes Bomblet mit einem passiven, auf Hochfrequenzbestrahlung reflektiv reagierenden Antwort-Etikett ausgerüstet ist, dessen Antwortsignal aus der näheren Umgebung mittels eines Detektors aufnehmbar ist.

2. System nach Anspruch 1,
**dadurch gekennzeichnet,**
**daß** ein magnetostriktives Material aufweisendes, magnetisch resonantes Etikett vorgesehen ist.

3. System nach Anspruch 1,
**dadurch gekennzeichnet,**
**daß** ein nach dem Barkhausen-Effekt reagierendes magnetisch nicht-linear ausgerüstetes Etikett vorgesehen ist.

4. System nach Anspruch 1,
**dadurch gekennzeichnet,**
**daß** ein elektromagnetisch resonantes Etikett vorgesehen ist.

5. System nach Anspruch 1 oder 4,
**dadurch gekennzeichnet,**
**daß** das Etikett eine hochfrequent elektromagnetisch anregbare Dipolstruktur aufweist.

6. System nach Anspruch 5,
**dadurch gekennzeichnet,**
**daß** für eine Bestückung des Munitionsartikels ein Antwort-Etikett vorgesehen ist, das auf der einen, bei der Applikation auf den Munitionsartikel dessen Wandung zugewandten Oberfläche eines elektrisch isolierenden flexiblen Trägermaterials großflächig metallisiert ist und auf der anderen Oberfläche eine Anordnung von zwei Viertelwellen-Dipolen trägt, die mittels eines nicht-linearen elektrischen Elementes elektrisch miteinander verbunden sind, das noch nicht von einer eingestrahlten Hochfrequenz, wohl aber zusammen mit einer ihr überlagerten Modulationseinstrahlung periodisch in den niederohmigen Bereich durchgesteuert wird und so amplitudenmodulierte Hochfrequenz reflektiert.

7. System nach Anspruch 6,
**dadurch gekennzeichnet,**
**daß** das Trägermaterial eine flexible Folie ist.

8. System nach Anspruch 6 oder 7,
**dadurch gekennzeichnet,**
**daß** die Viertelwellen-Dipole etwa gleichschenklig-dreieckig sektorförmige elektrisch leitend kaschierte Flächen mit aufeinander zu weisenden Spitzen bilden.

9. System nach einem der Ansprüche 5 bis 8,
**dadurch gekennzeichnet,**
**daß** mittels einer Hochfrequenzdiode miteinander verbundene Dipole vorgesehen sind.

10. System nach einem der Ansprüche 5 bis 8,
**dadurch gekennzeichnet,**
**daß** die Dipole aus unterschiedlichen Materialien gebildet sind, die sich in einem Bereich überlappen, der dadurch nichtlineare elektrische Eigenschaften aufweist.
